# EUROPEAN PATENT APPLICATION

(11) **EP 1 271 223 A2**
(43) Date of publication of application: **02.01.2003**
(21) Application number: 02254297.1
(22) Date of filing: 20.06.2002
(51) Int. Cl.: G02F 1/13357, G02F 1/13, H04M 1/02

(54) **Electronic display**

(30) Priority: 28.06.2001 US 892638
(71) Applicant: Nokia Corporation, 02150 Espoo (FI)
(72) Inventor: Doe, Steven, Camberley, Surrey (GB)
(74) Representative: Johnson, Ian Michael

(57) **Abstract**

An electronic display such as a liquid crystal display (LCD) is disclosed. A mobile telecommunications device incorporating the display according to the invention is also disclosed. The electronic display comprises a lightguide and an active display layer component, with the lightguide and the active display layer component being arranged to be in contact to diminish optical interference between the lightguide and the active display layer component. Optical interference is diminished by the contruction. As the lightguide and substrate layer are in contact, the display is thinner than known displays so the telecommunications device can be made smaller, or more space provided for other components.

## Description

### Field of the Invention

The present invention relates to electronic displays such as liquid crystal displays (LCDs) and more specifically to thin film LCDs made from plastic. The invention also applies to any type of electronic display that requires a frontlight. For example, other types of LCD's including cholesteric, electrophoretic, passive TN and STN type LCDs with internal polarisers and active LCDs with internal polarisers. Another type of electronic display to which the invention may also apply is Interference Modulation (IMOD) displays which is made up of many thin film very small reflecting elements which can be moved to generate optical interference. The invention may also apply to saturated particle displays, electrochromic displays, electrophoretic and rotating ball displays. The present invention also relates to a mobile telecommunications device, such as a mobile telephone, incorporating an electronic display according to the invention.

### Background to the Invention

LCDs are well known and generally comprise a digital or alphanumeric display consisting of liquid crystal material sealed between two supporting sheets of plastic or glass. A thin transparent film of conductive material such as a transparent metal oxide film is applied to the surface of each supporting sheet facing the liquid crystal material and the conductive film on one sheet is etched into character forming segments, each having electrical leads extending towards the edge of the sheet for connection to driving circuitry, which controls the voltage applied to various areas of the display, and a power supply such as a battery. A polarising filter sandwiched between two transparent substrate layers is also disposed on the outer surface of each supporting sheet with their planes of polarisation oriented at right angles to each other.

The most common LCD is called a twisted nematic (TN) display. Another type of LCD is called super twisted nematic (STN) display. Both types employ a nematic liquid crystal. A polymer alignment layer is applied to the conductive film on each supporting sheet facing the nematic liquid crystal and is rubbed to create a series of parallel microscopic grooves in the surface of the film which are oriented in the same direction as the plane of polarisation of the polarising filter disposed on each supporting sheet. These grooves ensure that the first layer of molecules of the liquid crystal are aligned with their longitudinal axes parallel to the grooves. Each successive layer of molecules gradually twists until the furthest layer is at an angle (90 degrees in twisted nematic displays) to the first layer and so that the outermost molecules contacting each supporting sheet are matched with the plane of polarisation of the polarisation filters on that sheet. The LCD also includes a sheet of reflective material on its back surface.

When there is no voltage applied between the conductive films, light striking one of the polarisation filters is polarised and the successive layers of molecules guides the polarised light they receive to the next molecular layer. When the polarised light has transversed the liquid crystal and guided through an angle of 90 degrees, it passes through the second polarising filter and is subsequently reflected back off the reflective surface placed behind it. The reflected light is guided back through the crystal along the same path and emerges in the same place that it struck the first polarisation filter. When an electric charge is applied to a region of the liquid crystal molecules, the orderly twisted arrangement of the molecules in that region is disrupted and the molecules untwist. This changes the angle of the light passing through them so that it no longer matches the angle of the polarising filter preventing the light from passing back out of that region of the LCD, making it darker than the surrounding areas. The region to which a voltage is applied is normally one or more of the character forming segments or pixels. By applying current to different character forming segments or pixels simultaneously, a recognisable character or numeral can be generated.

The polarising filter is formed from a chemical compound composed of molecules that naturally align in parallel relation to one another so that they create a microscopic filter that blocks any light not matching their alignment. The light passing through the polarising filter between the substrate sheets is thereby polarised.

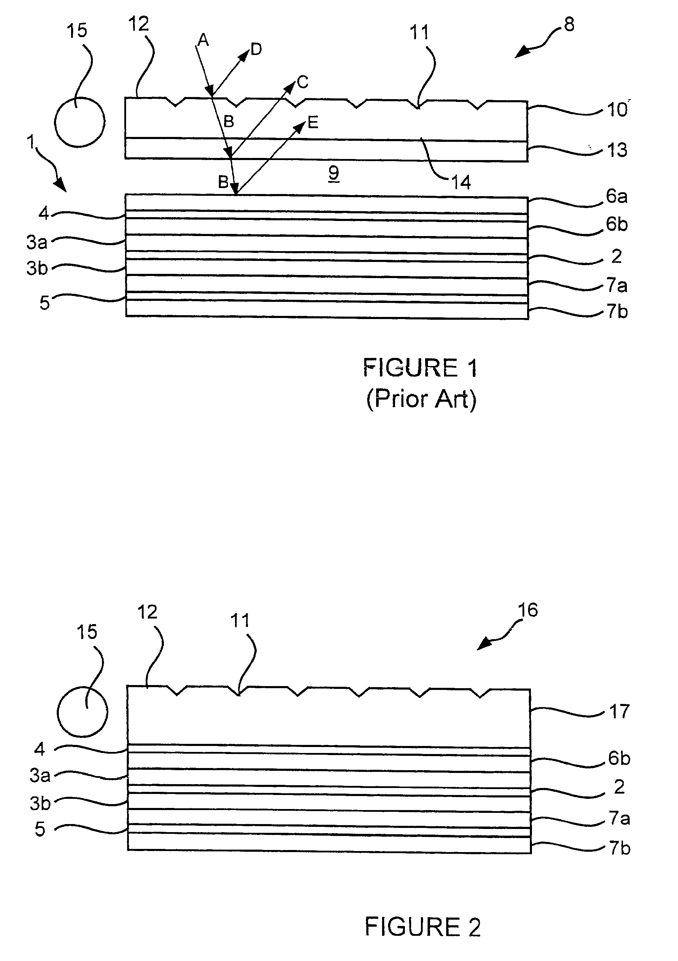

When the display is viewed in daylight, it can be illuminated using the available ambient light. However, at night or when the ambient light level is low, the display maybe illuminated by one or more light sources located around the periphery of a frontlight which is a planar sheet usually formed from plastic positioned above the display and comprising a lightguide having a number of parallel grooves etched in its upper surface to redirect light emitted by the light source toward the display. As the frontlight is a separate component from the display, a small air gap exists between them after assembly of the display and frontlight and so an anti-reflective coating is provided on its lower surface for reasons which will be described in more detail with reference to the prior art electronic display and frontlight illustrated in Figure 1.

An exploded view of the main components of a prior art electronic display 1 and frontlight 8 is illustrated in Figure 1 and it will be seen that the display 1 comprises an active layer, such as a liquid crystal layer 2, sandwiched between a pair of plastic optically non-birefringent front and rear supporting layers 3a, 3b. A thin transparent film (not shown) of conductive material is applied to the back surface of front supporting layer 3a facing the liquid crystal layer 2 which is then etched to form character segments (not shown). A second transparent conductive film (not shown) is applied to the surface of the rear supporting 3b facing the liquid crystal layer 2. Each film is treated with a polymer alignment layer (not shown) which is rubbed to form a series of parallel microscopic grooves. A polarising filter 4,5 is then positioned over each of the plastic supporting layers 3a, 3b with their planes of polarisation oriented at right angles to each other and so that the plane of polarisation of each filter corresponds to the grooves formed in its adjacent supporting layer. A pair of substrate layers 6a, 6b and 7a,7b sandwich each polarising filter 4,5, respectively. A reflective layer (not shown) is also located on the back of the LCD behind polarising filter 5.

The frontlight 8 is located above the LCD 1 parallel to and spaced from the substrate layer 6a on the polarising filter 4. As the frontlight 8 is a separate component to the display 1, a small air gap 9 will always be present between them even if the frontlight 8 is directly assembled on the display. The frontlight 8 comprises a light guide 10 formed from a transparent plastic sheet in which has been cut a series of spaced parallel grooves 11 in its upper surface 12 and an anti-reflective coating 13 disposed on its lower surface 14. A light source 15 is located adjacent to the periphery of the light guide 10. Light emitted by the light source 15 is directed toward the display 1 by the grooves 11 to illuminate it. The anti-reflective coating 13 is required because incoming light entering the frontlight in the direction of arrow A in Figure 1 strikes the rear surface of the frontlight 8 and most of it is transmitted toward the display 1 in the direction of arrow B. However, some of the light is reflected in the direction shown by arrow C due to the differences in the refractive index between the material from which the frontlight 8 is made and the air through which the light must pass before it enters the display 1. This reflected light is "wasted" because it does not illuminate the display 1 which consequently appears darker. The reflected light also makes the display 1 harder to read. A second anti-reflective coating (not shown) may be provided on the top surface of the display 1 between the display 1 and the frontlight and/or on the upper surface 12 of the frontlight 8 to reduce reflection of light in the direction of arrow D and E respectively as shown in Figure 1.

It is desirable to manufacture electronic displays and front lights which are as thin as possible so that they do not take up too much space in the housing of an electronic device in which they are used, especially when size constraints are important, as in the case of mobile telephones. If the electronic display and front light can be made thinner, a corresponding reduction in thickness of the mobile telephone housing can be realised or more space is made available for other components. It is also desirable to reduce manufacturing costs wherever possible without compromising the quality of the device.

### Summary of the Invention

The present invention seeks to provide an electronic display and front light having a reduced thickness and which is cheaper and easier to manufacture.

The present invention provides an electronic display comprising a lightguide and an active display layer component, wherein the lightguide and the active display layer component are arranged to be in contact to diminish optical interference between the lightguide and the active display layer component.

Preferably, the active display layer component comprises one or more substrate layers. In such as case, a substrate layer may be in contact with lightguide.

Preferably, the active display layer component comprises one or more polarising filter layers. One or more of the polarising filter layers may be sandwiched between substrate layers.

Preferably, the active display layer of the active display layer component comprises liquid crystal display functionality.

Preferably, the lightguide is integrally formed with the active display layer component.

Preferably, the lightguide and active display layer component are disposed on a polarising filter layer.

The polarising filter layer may be a chemical compound film.

Preferably, the active display layer is sandwiched between two polarising filters, the active layer being spaced from each polarising filter by a substrate layer which provides a common substrate for each polarising filter and the active layer.

Preferably, the active display layer component and lightguide are constructed from a single sheet of plastic film.

The present invention also provides a telecommunications device incorporating the electronic display according to the invention.

The telecommunications device is preferably a mobile telephone.

Although the present invention is primarily described with reference to a twisted nematic display, it will be appreciated that the invention is also applicable to other types of display including super twisted nematics (STN), dual scam twisted nematics (DSTN), ferroelectric liquid crystal (FLC) and surface stabilized ferroelectric liquid crystal (SSFLC).

### Brief Description of the Drawings

Figure 1 shows an side elevation of an electronic display according to the prior art;
Figure 2 shows a side elevation of an electronic display according to the present invention;
Figure 3 shows a side elevation of a second embodiment of an electronic display according to the invention; and
Figure 4 shows a mobile telephone incorporating the electronic display shown in Figures 2 or 3.

### Detailed Description of the Preferred Embodiments

Embodiments of the present invention will now be described, by way of example only, with reference to Figures 2 to 4 of the accompanying drawings.

An electronic display 16 according to the invention is illustrated in Figure 2 from which it can be seen that it comprises an active layer, such as a liquid crystal layer 2 sandwiched between a pair of plastic optically non-birefringent front and rear supporting layers 3a, 3b. A polarising filter 4,5 is positioned over each of the plastic supporting layers 3a, 3b, and a pair of substrate layers 7a,7b sandwich polarising filter 5 as described with reference to the prior art arrangement shown in Figure 1. However, in the embodiment of the invention, the substrate layer 6b is present between the polarising filter 4 and the front supporting layer 3a but substrate layer 6a has been omitted. Instead, the lower surface 14 of the lightguide 17 has been directly mounted to the polarising filter 4. The invention therefore combines the substrate layer 6a of the display and the lightguide 10 of the prior art to form an integrated single component. It will also be apparent that because the lightguide 10 and display 16 have been integrated, there is no longer an air gap and so no need for an anti-reflective coating on the lightguide 10 because there is no optical interface between the lightguide 10 and the display 16 which is required for reflection to occur.

The integral lightguide 10 and display 16 provides the advantage that the overall thickness of a standard display and separate frontlight is reduced and it is also cheaper and easier to manufacture as there is no longer a requirement for an anti-reflective coating.

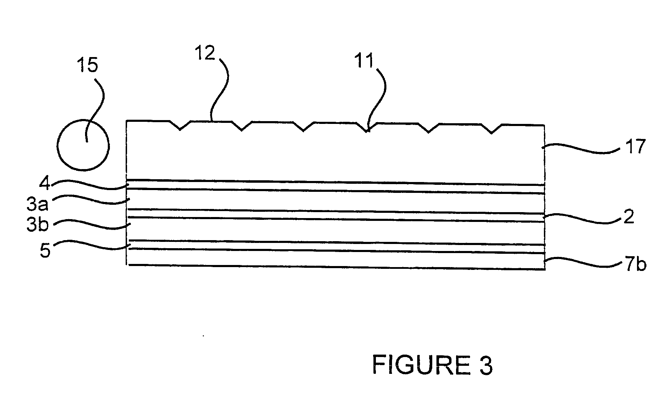

A second embodiment of the present invention will now be described, with reference to Figure 3. The electronic display of this embodiment is essentially the same as in the first embodiment described with reference to Figure 2. However, the thickness of the display is further reduced by combining the substrate layer 6b with the supporting layer 3a and by combining the substrate layer 7a with the supporting layer 3b. More specifically, polarising filter 4 and the active layer 2 share a common substrate 18, and polarising filter 5 and the active layer 2 share a common substrate 19. As the two separate optically non birefringent plastic supporting layers 3a, 3b and substrate layers 6b,7a are no longer required, the electronic display is cheaper to manufacture in addition to being thinner than an electronic display and combined lightguide according to the first embodiment or substantially thinner than a prior art electronic display.

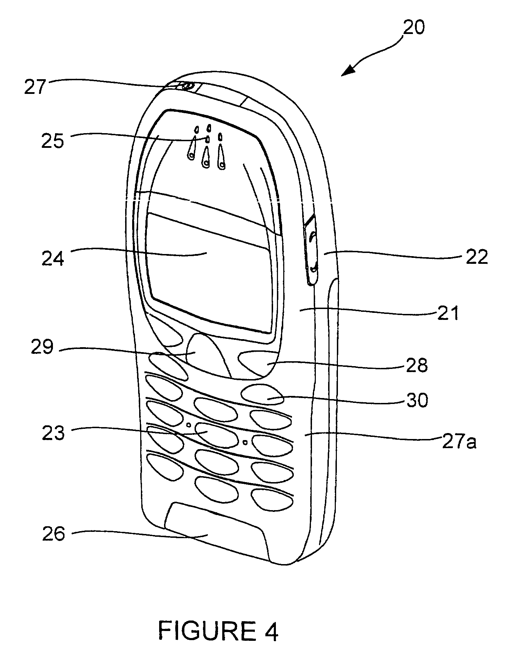

A mobile telephone incorporating an electronic display according to the invention is illustrated in Figure 4. The telephone 20 has a front and rear face 21,22. The front face 21 is provided with a user interface having a keypad 23, a display 24 formed from the electronic display of the invention, an ear piece 25, a microphone 26 and an on/off key 27. The telephone 20 may be adapted for communication via a wireless telecommunications network, e.g. a cellular network. However, the telephone 20 could also be designed for a cordless network. The keypad 23 has a first group of keys 27a which are alphanumeric and by means of which a use can enter a telephone number, write a text message (SMS) or write a name associated with a particular number, etc.

The keypad 23 additionally includes two soft keys 28, the functionality of which depends on the state of the telephone and the navigation in the menu by means of a navigation key 29, and two call handling keys 30, which can be used for establishing a call or a conference call, terminating a call or rejecting an incoming call.

Many modifications and variations of the invention falling within the terms of the following claims will be apparent to those skilled in the art and the foregoing description should be regarded as a description of the preferred embodiments only. For example, the electronic display of the invention may be installed in apparatus other than a mobile telephone, such as a personal digital assistant (PDA).

## Claims

1. An electronic display comprising a lightguide and an active display layer component, wherein the lightguide and the active display layer component are arranged to be in contact to diminish optical interference between the lightguide and the active display layer component.

2. An electronic display according to claim 1, wherein the active display layer component comprises one or more substrate layers.

3. An electronic display according to claim 2, wherein a substrate layer is in contact with lightguide.

4. An electronic display according to any preceding claim, wherein the active display layer component comprises one or more polarising filter layers.

5. An electronic display according claims to 4, wherein one or more of the polarising filter layers is sandwiched between substrate layers.

6. An electronic display according to any preceding claim, wherein the active display layer of the active display layer component comprises liquid crystal display functionality.

7. An electronic display according to any preceding claim, wherein the lightguide is integrally formed with the active display layer component.

8. An electronic display according to any preceding claim, wherein the lightguide and active display layer component are disposed on a polarising. filter layer.

9. An electronic display according to claim 8, wherein the polarising filter layer is a chemical compound film.

10. An electronic display according to any preceding claim, wherein the active display layer is sandwiched between two polarising filters, the active layer being spaced from each polarising filter by a substrate layer which provides a common substrate for each polarising filter and the active layer.

11. An electronic display according to any preceding claim, wherein the active display layer component and lightguide are constructed from a single sheet of plastic film.

12. A telecommunications device incorporating the electronic display according to claim 1.

13. A telecommunications device according to claim 12, wherein the telecommunications device is a mobile telephone.
